# EUROPEAN PATENT SPECIFICATION

(11) **EP 1 779 697 B1**
(45) Date of publication and mention of the grant of the patent: **21.02.2018**
(21) Application number: 05772926.1
(22) Date of filing: 12.08.2005
(51) Int. Cl.: H04W 36/12, H04W 36/18, H04W 72/12

(54) **COMMUNICATION SYSTEM**
KOMMUNIKATIONSSYSTEM
SYSTÈME DE COMMUNICATION

(30) Priority: 16.08.2004 GB 0418281
(43) Date of publication of application: 02.05.2007
(73) Proprietor: Vringo Infrastructure Inc., New York, NY 10017 (US)
(72) Inventor: Apt. 102, 2-18-3 Shiboku, Kanagawa (JP); RANTA-AHO, Karri, FIN-02600 Espoo (FI)
(74) Representative: Hale, Peter
(86) International application number: PCT/IB2005/002499
(87) International publication number: WO 2006/018715

(56) References cited:
- US-A1- 2005 094 600
- 3GPP: "3rd Generation Partnership Project; Technical Specification Group Radio Access Network; Feasibility Study for Enhanced Uplink for UTRA FDD (Release 6)" 3GPP TR 25.896 V1.1.2, XX, XX, 5 December 2003 (2003-12-05), page complete, XP002321679 cited in the application
- NOKIA: "Scheduling in SHO", 3GPP DRAFT; R1-031205, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Lisbon, Portugal; 20031119, 19 November 2003 (2003-11-19), XP050098266, [retrieved on 2003-11-19]

## Description

### BACKGROUND TO THE INVENTION:

### Field of the Invention:

The invention relates to the control of transmissions in an uplink channel in a communication system, and particularly but not exclusively, to an enhanced dedicated channel in a UMTS system.

### Description of the Related Art:

A mobile communication system is an example of a system in which an access network is provided to allow access to the system functionality for user terminals.

In a universal mobile telecommunications system (UMTS), a radio access network typically provides access for user equipment to a mobile communications system core network. The user equipment typically communicates with the access network over a radio interface, the access network including a plurality of Node Bs, or more generally network access points, with which the user equipment establishes a connection. Each of the Node Bs is connected to one or more radio network controllers, or more generally network access controllers.

A dedicated channel (DCH) is provided in a UMTS system for uplink traffic from the user equipment to the radio network controller via the Node B. A frame transmission interval is defined for this channel. A typical, and thus far the shortest, frame transmission interval for a dedicated channel is 10ms.

In 3^{rd} Generation Partnership Project, Technical Specification Group Radio Access Network (3GPP TSG-RAN) there has been proposed high speed uplink packet access (HSUPA), also known in 3GPP as Frequency Division Duplex (FDD) Enhanced Uplink, including an enhanced dedicated, E-DCH. This proposal is documented in 3GPP TR25.896.

A proposed characteristic of the E-DCH is to provide a shorter frame transmission interval of 2ms in addition to the 10ms interval. It has been further discussed whether the E-DCH is to support soft handover (SHO). More specifically, in 3GPP the support of Node B control scheduling for the E-DCH during Inter-Node B soft handover (SHO) is currently under discussion. A number of approaches for control scheduling for the E-DCH during SHO have been discussed. In prior art arrangements in analogous areas, the UE has been adapted to decide on the scheduling Node B and signal this information in the uplink to other Node B's in its active set.

In operation, each UE has a so-called active set of one or more cells, representing cells with which the UE is connected or potentially may be connected. The active set may be considered to include any cell in which the UE is connected and, in known parlance, any candidate cells which may be suitable for the UE to connect in. Each cell in a UE active set is associated with a Node B. The active set of a UE therefore may correspond to one or more Node B's.

In one approach for Node B control scheduling for E-DCH during Inter-Node B SHO under discussion, it has been discussed that all Node B's, which are controlling one or more cells in the UE active sets, execute scheduling during the SHO, as disclosed in agenda item 7.1 "Enhanced Uplink DCH Sceduling" of 3GPP TSG-RAN WG1 meeting #35, November 17-21, 2003. In a further approach, it has been discussed that only the Node B which is controlling the best uplink or downlink cell executes the scheduling during the SHO. In this approach, a switching between two Node B's is needed for the execution of the scheduling. That is, there is a need for switching between the Node B which is executing the scheduling, defined to be the source scheduling Node B, and the Node B that will execute the scheduling, defined to be the target scheduling Node B, during inter-Node B SHO. In the event that the E-DCH is setup during inter-Node B SHO, the Node B which starts to execute the scheduling must know about it, whereas the Node B which does not execute the scheduling should know about it. In addition, the information relating to the scheduling may be needed to be synchronised amongst or between the Node B's involved.

In a still further approach, it has been proposed that no scheduling is executed during the SHO.

### SUMMARY OF THE INVENTION:

It is an aim of the invention to at least provide an improved technique for establishing or changing the controlling network access for an E-DCH during SHO in a UMTS system.

According to an aspect of the present invention, there is provided a method of determining an access point (108a, 108b, 108c) for controlling scheduling of an enhanced dedicated channel in a mobile communication system comprising an access controller (106a, 106b, 106c) during soft handover, in which an access point is configured as a source scheduling access point, characterised in that the method comprises the access controller (106a, 106b, 106c): selecting a target scheduling access point (108a, 108b, 108c); sending an instruction to the source scheduling access point to stop scheduling; and sending an instruction to the target scheduling access point (108a, 108b, 108c) to start scheduling.

The method may comprise the step of determining an access point more suitable for scheduling, and selecting such access point as the target access point. The method may further comprise the step of providing information from the source scheduling access point to the target scheduling access point. The method may further include the step of notifying the non-selected access points that they are non-selected. The step of selecting a target scheduling access point may comprise determining, at an access controller, the access point having the strongest uplink or downlink connection with a user equipment. Responsive to completion of a scheduling change or update, the target access point may transmit an update message. The update message may be transmitted to an access controller.

According to another aspect of the present invention, there is provided an access controller for determining an access point for controlling scheduling of an enhanced dedicated channel in a mobile communication system during soft handover: in which an access point is configured as a source scheduling access point, characterised in that the access controller comprises selection means for selecting a target scheduling access point; inhibiting means for sending an instruction to the source scheduling access point to stop scheduling; and initiating means for sending an instruction to the target scheduling access point to start scheduling.

The access controller may comprises means for determining an access point more suitable for scheduling, and means for selecting such access point as the target access point. The access controller may further comprise means adapted to provide information from the source scheduling access point to the target scheduling access point. The access controller may further include means for notifying the non-selected access points that they are non-selected. The means for selecting a target scheduling access point may comprise means for determining the access point having the strongest uplink or downlink connection with a user equipment. The access controller may include means, responsive to completion of a scheduling change or update, for receiving an update from the target access point.

According to a further aspect of the present invention, there is provided a mobile communication system including a plurality of access points and at least one access controller for determining an access point for controlling scheduling of an enhanced dedicated channel during soft handover, wherein at least one of said access points is configured as a source scheduling access point; characterised in that the access controller comprises selection means for selecting a target scheduling access point; inhibiting means for sending an instruction to the source scheduling access point to stop scheduling; and initiating means for sending an instruction to the target scheduling access point to start scheduling

The access controller may further comprise means for notifying the others of the plurality of access points of their non-selection for scheduling.

The scheduling access point may be adapted to transmit a scheduling update to the access controller responsive to a scheduling update at the access point.

The mobile communications system may be a UMTS system, wherein the at least one access controller is a radio network controller, and the plurality of access points are Node Bs.

### BRIEF DESCRIPTION OF THE FIGURES:

The invention will now be described by way of example with reference to the accompanying figures, in which:
Figure 1 illustrates elements of a radio access network in which embodiments of the invention may be implemented;
Figure 2 illustrates a flow chart for a first mode of operation;
Figure 3 illustrates a flow chart for a second mode of operation; and
Figure 4 illustrates a flow chart for a third mode of operation.

### DESCRIPTION OF THE PREFERRED EMBODIMENTS:

The invention is described herein by way of reference to particular example scenarios. In particular the invention is described in relation to elements of a universal mobile communication telecommunications system (UMTS).

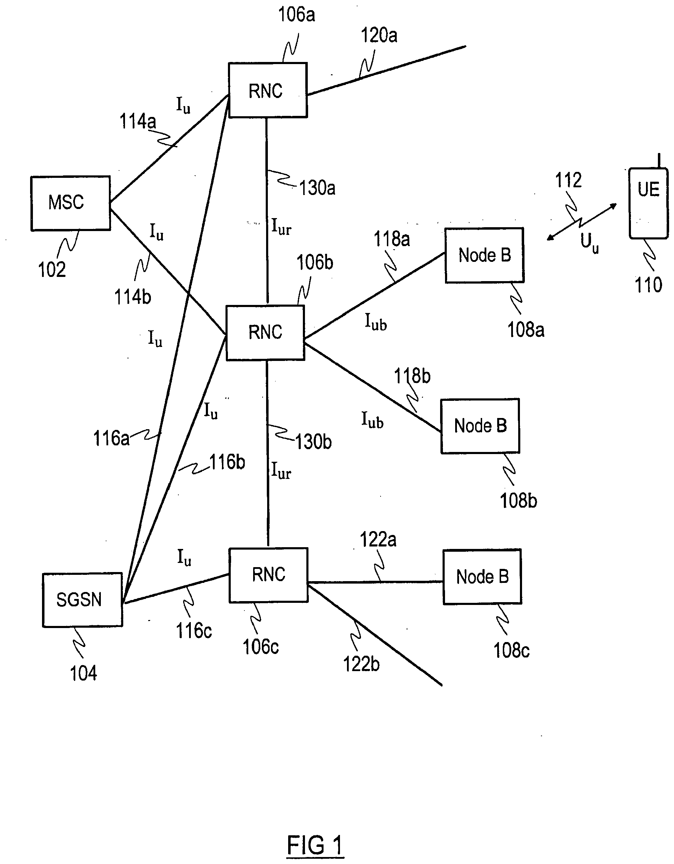

In Figure 1, there is illustrated those typical elements of a UMTS system necessary for understanding embodiments of the present invention. The implementation of a UMTS system will be well-known to one skilled in the art. As such the system is not described in detail herein, but only sufficient elements shown and described as is necessary for an understanding of the invention.

Referring to Figure 1, an example UMTS system typically includes a mobile switching centre (MSC) 102, a serving GPRS support node (SGSN) 104, a plurality of radio network controllers (RNCs) 106a, 106b, 106c, a plurality of Node Bs 108a, 108b, 108c, and at least one user equipment (UE) 110.

In practice, the MSC functionality may be provided by an MSC Server (MSS) and a Media Gateway (MGW).

As is known in the art, the at least one user equipment 110 connects with one of the Node Bs, for example Node B 108a, over a radio interface 112, known in the 3GPP UMTS system as a Uᵤ interface.

Each Node B is connected to at least one RNC via an I_{ub} interface. The RNC 106b connects to the Node Bs 108a and 108b via I_{ub} interfaces 118a and 118b respectively, and possibly to one or more other Node Bs. The RNC 106c connects to the Node B 108c via I_{ub} interface 122a, and to one or more other Node Bs via one or more other I_{ub} interfaces, such as interface 122b. The RNC 106a connects to one or more Node Bs via one or more I_{ub} interfaces, such as interface 120a. Various RNCs may connect to various Node Bs, as known in the art.

The RNCs themselves are interconnected via Iᵤᵣ interfaces. In Figure 1, it is shown that the RNC 106a is connected to the RNC 106b via an Iᵤᵣ interface 130a, and the RNC 106b is connected to the RNC 106c via an Iᵤᵣ interface 130b. The RNCs 106a and 106c may similarly be interconnected via an Iᵤᵣ interface. The various RNCs may be interconnected via Iᵤᵣ interface.

Each of the RNCs in the UMTS system is connected to one or more MSCs or SGSNs via an Iᵤ interface. In the example of Figure 1, the MSC 102 is connected to the RNCs 106a and 106b via respective Iᵤ interfaces 114a and 114b, and the SGSN 104 is connected to the RNCs 106a, 106b and 106c via respective Iᵤ interfaces 114a, 114b and 114c.

It has been proposed, in 3GPP TSG-RAN, for a new enhanced DCH uplink transport channel. The DCH uplink transport channel is a channel for transporting traffic from a user equipment to a Node B in the radio interface Uᵤ, and for transporting traffic from a Node B to an RNC, and between RNCs, on the I_{ub} interface or the Iᵤᵣ interface. Embodiments of the invention propose various improvements and enhancements to support the enhanced DCH.

One of the two fundamental features of the enhanced dedicated channel is that a Node B may schedule its own data rate. The E-DCH exists in the uplink, and the Node B is able to control the data rate of the E-DCH. The uplink DCH data rate is controlled or scheduled by the RNC. With the E-DCH, however, the control given to the Node B enables the Node B to control the usage of the cell's uplink loading and allocate some users with higher data rates and some users with lower data rates, and change the allocated rates at a fast pace.

When a UE is in a soft handover state with multiple Node Bs there is a need to decide, and inform the Node Bs participating in the SHO, as to which Node B is the one that is sending scheduling commands for the E-DCH to the UE, i.e. the identity of the scheduling or controlling Node B.

In a preferred embodiment, it is assumed that the decision as to which Node B is to be the controlling or scheduling Node B, and the informing of such selection to any other Node Bs, is carried out by the serving RNC, although the invention is not limited to such. Thus preferably the serving RNC makes the scheduling decisions for the E-DCH, configures the Node Bs accordingly, and informs the UE as to the decisions made.

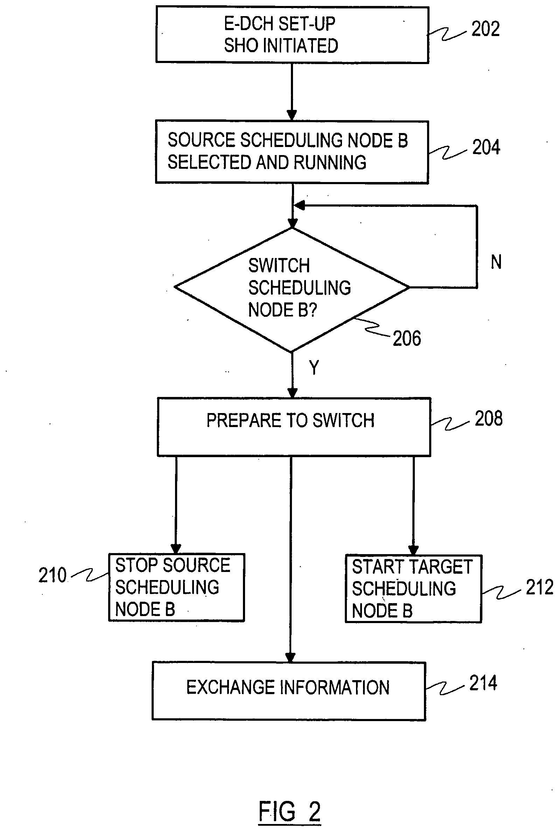

A first mode of operation is described with reference to the flow chart of Figure 2. In the first mode of operation, it is assumed that an enhanced dedicated channel is established, and a soft handover has been initiated. This is denoted in Figure 2 by block 202.

As denoted by step 204, a source scheduling Node B has been selected and is running. The source scheduling Node B may have been selected in any known way, and the initial selection of a scheduling Node B for E-DCH is outside the scope of this mode of operation.

In a step 206, it is assumed that the serving RNC is monitoring, periodically or continuously, the access network to determine if a change of the scheduling Node B is appropriate. The invention, and embodiments thereof, is not limited to a specific technique by which a decision to switch the scheduling Node B is made, nor is it limited necessarily to the decision being made by the serving RNC. It should also be noted that it is not necessary for the source scheduling Node B, or any Node B which may become the scheduling Node B, to be connected to the same RNC.

The serving RNC of the UE is always the RNC in control of all radio links to the given UE. Thus even where there is another Node B that is connected to the serving RNC via another RNC, the serving RNC remains in control. Relocation of the serving RNC of any given connection, as known in the art, may occur in combination with other features of this invention, but is in itself outside the scope of the invention. The invention is relevant to the selection or change of a scheduling Node B, not which RNC is making the decision to select or change the scheduling Node B.

Referring again to Figure 2, if in step 206 it is determined, by any means, that the scheduling Node B should be switched, then the process moves on to step 208 where the switch from a source scheduling Node B to a target scheduling Node B is prepared. The identity of the target scheduling Node B is preferably determined in step 206.

Once preparations for the switch are complete, in a step 210 an instruction to the source scheduling Node B to 'stop' or inhibit scheduling is sent, and in step 212 an instruction to the target scheduling Node B to 'start' or initiate scheduling is sent. Thus, control of the E-DCH scheduling is switched.

The change of the scheduling Node B may or may not require for information to be relayed from the source scheduling Node B to the target scheduling Node B. In such case, the relaying of information allows the target scheduling Node B to synchronise information related to the scheduling to information known by the source scheduling Node B. The need for relaying of information will be dependent upon implementation requirements. In current implementations, the Node B's are not able to communicate directly with each other, but communicate through the RNCs they are connected to. If a Node B is not connected to the serving RNC of the radio link, then it may communicate any necessary signalling through the RNC with which it is connected.

The message signalling to the Node Bs may be implemented in accordance with any signalling supported in the radio access network. For example, an RNC may send the source scheduling Node B an RNSAP/NBAP message or a downlink FP (Frame Protocol) including a request to stop scheduling. The RNC may send the target scheduling Node B an RNSAP (radio network subsystem application part)/NBAP (Node B Application Part) message or a downlink FP including a request to start scheduling. The information is preferably carried in the messages used for RNSAP/NBAP: Synchronised Radio Link Reconfiguration Prepare procedure and Unsynchronised Radio Link Reconfiguration procedure. Alternatively the information may be carried in Iᵤᵣ/I_{ub} downlink FP.

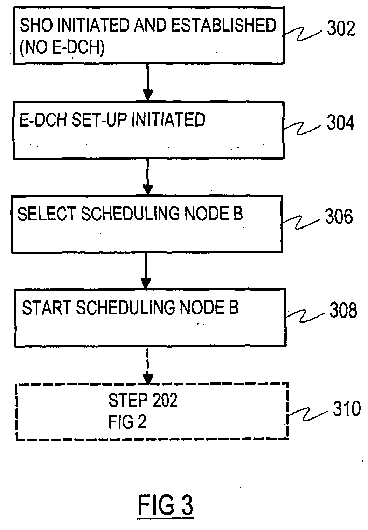

A second mode of operation is described with reference to the flow chart of Figure 3. This mode of operation relates to a situation where an E-DCH is setup during an actual SHO. The first mode (described above) relates to a scenario where there is a need to transfer between two scheduling Node Bs during an SHO and with an existing E-DCH setup. In this method, as the SHO is taking place the serving RNC becomes aware of an E-DCH setup.

Referring to Figure 3, as represented by block 302 a soft handover is initiated and under way. It is assumed that there is no E-DCH set up. At some point after the initiation of the SHO the serving RNC, as represented by step 304, makes a decision to set up an E-DCH (on the uplink channel), in accordance with information it has on the expected uplink traffic. For the purposes of this description, it is thus a given fact that the E-DCH is being set up. Thus the serving RNC, as denoted by step 304 determines an E-DCH set up is to be initiated.

In such a situation a DCH channel may already exist in the SHO. DCH and E-DCH are always connected to the same Node Bs, thus experiencing the same SHO status.

On initiation of the E-DCH, the Node Bs participating in the SHO are informed of the E-DCH setup. Each of these Node Bs is also individually informed as to whether or not they are to be the scheduling Node B. One of the Node Bs is thus informed that it is to be the scheduling Node B, and the others are informed that they are not.

After the SRNC is notified or made aware of the E-DCH setup during the SHO, the SRNC determines the scheduling Node B, preferably by determining the Node B which is controlling the best uplink/downlink cell. However the exact criteria on which the scheduling Node B is selected is network implementation specific. The serving RNC is thus able to determine the one of the Node Bs to be the scheduling Node B in dependence on some implementation criteria, which may be standardised. The invention is not limited to any specific arrangement. The selection of a particular Node B as the scheduling Node B is represented by step 306 of Figure 3.

In signalling to the Node Bs on selection of the scheduling Node B, it is envisaged that any suitable signalling mechanism for conveying the necessary information may be used. In one implementation, a common NBAP/RNSAP message is sent to all Node Bs. Preferably, however, an information element in the message to the scheduling Node B is different to that in the others. Thus the same messages are preferably sent to all Node Bs, but the content of the message to the scheduling Node B is different to include information to start scheduling. This may be implemented in a number of ways, for example with a field being left blank in the message to the non-scheduling Node Bs.

The invention and embodiments thereof are not limited to any specific messaging implementation. It is merely sufficient that the Node B which is to carry out the scheduling is informed of such, and it is ensured that no other Node Bs carry out scheduling. It may not be necessary to send any message to the other Node Bs. However it may be preferable to notify the other Node Bs of the Node B which has become the scheduling Node B. All the messages then sent to the scheduling Node B may have different contents to the non-scheduling Node B.

After signalling to the Node Bs, the selected scheduling Node B starts scheduling, as denoted by step 308 in Figure 3.

Thereafter, the method steps of Figure 2 may be optionally performed, in a step 310 the method moving to step 202 of Figure 2. Thus the first mode of operation may be entered after completion of the described second mode of operation.

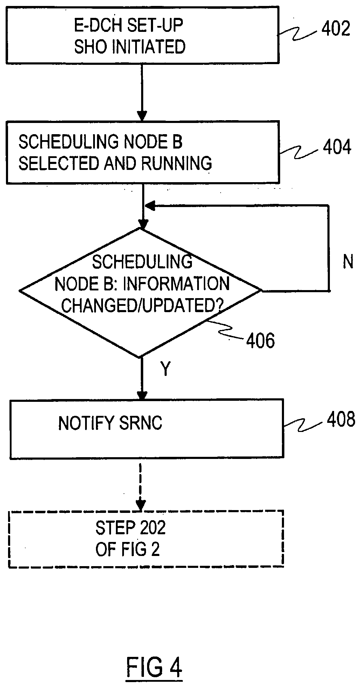

A third mode of operation is described with reference to the flow chart of Figure 4. In the third mode of operation, it is assumed that an enhanced dedicated channel is established, and a soft handover has been initiated. This is denoted in Figure 4 by block 402.

As denoted by step 404, a source scheduling Node B has been selected and is running. The source scheduling Node B may have been selected in any known way, and the initial selection of a scheduling Node B for E-DCH is outside the scope of this mode of operation.

In a step 406, it is assumed that the scheduling Node B is monitoring, periodically or continuously, to determine if a change or update of the scheduling information has occurred. The invention, and embodiments thereof, is not limited to a specific technique by which the scheduling information is changed or updated.

In this third mode of operation, when any scheduling related information is updated, the scheduling Node B preferably informs the serving RNC of the updated information, as denoted in step 408. In this way the serving RNC always has the updated information. This information may then also be passed by the serving RNC to the target scheduling Node B when the scheduling Node B change takes place.

This mode of operation may be directly linked to the first mode of operation described above, where there is a switch of the scheduling Node B. Alternatively, there may be other useful purposes for the SRNC to be provided with an update of scheduling related information. For example, the RNCs packet scheduler, admission control, power control, and load control functionalities may also utilise this information.

It can be seen from the above descriptions that the first and second mode of operations share a concept of deciding upon a Node B to be a scheduling Node B, informing the selected Node B that it is the scheduling Node B, and informing the other Node Bs participating in the SHO that they are not the scheduling Node Bs. The third mode of operation represents a refinement to the first and second mode and any common features thereof. It should also be noted that each of the three modes of operation may, taken in isolation, offer improved operation during SHO in respect of the E-DCH. Any aspect of any one mode of operation may be introduced into another mode of operation.

The principles of the present invention are preferably applied in soft handover (SHO) situations. Soft handover allows for radio links to be added and removed in a way such that the user equipment always maintains at least one radio link with the radio access network. Soft handover is performed by means of macro diversity, which refers to a condition where several radio links are active at the same time. The active radio links for a soft handover are generally known as soft handover branches. Two or more soft handover branches may terminate in the same radio network controller.

In general, the Node B may be considered to be a network access point, being a point at which a user terminal, such as a user equipment or mobile terminal, accesses a network. In general, the radio network controller may be considered to be a network access controller, being an element which controls network access.

In a preferable implementation, the scheduling Node B or controlling Node B is the Node B which controls the selection of the data rate in the E-DCH in the uplink. In general, however, it may control any characteristic of the E-DCH which is variable. This may be extended beyond the E-DCH, to any characteristic controllable by the Node B, or network access point.

The invention has been described herein by way of reference to particular non-limiting examples. One skilled in the art will understand the general applicability of the invention. The scope of protection afforded by the invention is defined in the appended claims.

## Claims

1. A method of determining an access point (108a, 108b, 108c) for controlling scheduling of an enhanced dedicated channel in a mobile communication system comprising an access controller (106a, 106b, 106c) during soft handover, in which an access point is configured as a source scheduling access point, **characterised in that** the method comprises the access controller (106a, 106b, 106c): selecting a target scheduling access point (108a, 108b, 108c); sending an instruction to the source scheduling access point to stop scheduling; and sending an instruction to the target scheduling access point (108a, 108b, 108c) to start scheduling.

2. A method according to claim 1 wherein the method comprises the step of determining an access point (108a, 108b, 108c) more suitable for scheduling, and selecting such access point as the target access point.

3. A method according to claim 1 or claim 2 wherein the method further comprises the step of providing information from the source scheduling access point to the target scheduling access point.

4. A method according to any one of claims 1 to 3 further including the step of notifying the non-selected access points that they are non-selected.

5. A method according to any one of claims 1 to 4 wherein the step of selecting a target scheduling access point comprises determining, at an access controller (106a, 106b, 106c), the access point having the strongest uplink or downlink connection with a user equipment.

## Patentansprüche

1. Verfahren des Bestimmens eines Zugangspunkts (108a, 108b, 108c) zum Steuern eines Scheduling eines erweiterten dedizierten Kanals in einem Mobilkommunikationssystem, das eine Zugangssteuerung (106a, 106b, 106c) umfasst, während eines Soft-Handovers, bei dem ein Zugangspunkt als ein Quell-Scheduling-Zugangspunkt konfiguriert wird, **dadurch gekennzeichnet, dass** das Verfahren umfasst, dass die Zugangssteuerung (106a, 106b, 106c) einen Ziel-Scheduling-Zugangspunkt (108a, 108b, 108c) auswählt; eine Anweisung zum Quell-Scheduling-Zugangspunkt sendet, um das Scheduling anzuhalten; und eine Anweisung zum Ziel-Scheduling-Zugangspunkt (108a, 108b, 108c) sendet, um das Scheduling zu starten.

2. Verfahren nach Anspruch 1, wobei das Verfahren den Schritt des Bestimmens eines für das Scheduling geeigneteren Zugangspunkts (108a, 108b, 108c) und des Auswählens eines derartigen Zugangspunkts als den Zielzugangspunkt umfasst.

3. Verfahren nach Anspruch 1 oder Anspruch 2, wobei das Verfahren ferner den Schritt des Bereitstellens von Informationen vom Quell-Scheduling-Zugangspunkt zum Ziel-Scheduling-Zugangspunkt umfasst.

4. Verfahren nach einem der Ansprüche 1 bis 3, das ferner den Schritt des Benachrichtigens der nicht ausgewählten Zugangspunkte, dass sie nicht ausgewählt sind, beinhaltet.

5. Verfahren nach einem der Ansprüche 1 bis 4, wobei der Schritt des Auswählens eines Ziel-Scheduling-Zugangspunkts Bestimmen, an einer Zugangssteuerung (106a, 106b, 106c), des Zugangspunkts, der die stärkste Aufwärtsstrecken- oder Abwärtsstreckenverbindung mit einem Benutzergerät aufweist, umfasst.

## Revendications

1. Procédé de détermination d'un point d'accès (108a, 108b, 108c) pour la commande de l'ordonnancement d'un canal dédié amélioré dans un système de communication mobile comprenant un contrôleur d'accès (106a, 106b, 106c) au cours d'un transfert intercellulaire en douceur, où un point d'accès est configuré comme un point d'accès d'ordonnancement source, le procédé étant **caractérisé en ce qu'**il comprend les étapes suivantes, mises en oeuvre par le contrôleur d'accès (106a, 106b, 106c) : sélection d'un point d'accès d'ordonnancement cible (108a, 108b, 108c) ; envoi d'une instruction d'interruption d'ordonnancement au point d'accès d'ordonnancement source ; et envoi d'une instruction de déclenchement d'ordonnancement au point d'accès d'ordonnancement cible (108a, 108b, 108c).

2. Procédé selon la revendication 1, lequel procédé comprend l'étape de détermination d'un point d'accès (108a, 108b, 108c) mieux adapté à l'ordonnancement, et de sélection de ce point d'accès comme point d'accès cible.

3. Procédé selon la revendication 1 ou la revendication 2, lequel procédé comprend en outre l'étape de fourniture d'informations du point d'accès d'ordonnancement source au point d'accès d'ordonnancement cible.

4. Procédé selon l'une quelconque des revendications 1 à 3, comportant en outre l'étape de notification donnée aux points d'accès non sélectionnés qu'ils ne sont pas sélectionnés.

5. Procédé selon l'une quelconque des revendications 1 à 4, dans lequel l'étape de sélection d'un point d'accès d'ordonnancement cible comprend l'étape de détermination, au niveau d'un contrôleur d'accès (106a, 106b, 106c), du point d'accès dont la connexion montante ou descendante avec un équipement utilisateur est la plus puissante.
